# EUROPEAN PATENT SPECIFICATION

(11) **EP 4 471 630 B1**
(45) Date of publication and mention of the grant of the patent: **06.08.2025**
(21) Application number: 23176934.0
(22) Date of filing: 02.06.2023
(51) Int. Cl.: H04W 4/80, H04W 12/06, G06F 21/44, H04L 9/40, H04W 4/70, H04W 12/65, H04W 12/08

(54) **METHOD FOR USING AN AMBIENT INTERNET-OF-THINGS READER DEVICE IN A MOBILE COMMUNICATION NETWORK IN ORDER TO COMMUNICATE WITH AN AMBIENT INTERNET-OF-THINGS TAG DEVICE, AMBIENT INTERNET-OF-THINGS READER DEVICE, ESPECIALLY USER EQUIPMENT, SYSTEM OR MOBILE COMMUNICATION NETWORK, AMBIENT INTERNET-OF-THINGS TAG DEVICE, PROGRAM AND COMPUTER-READABLE MEDIUM**
AMBIENT INTERNET-DER-DINGE-LESEGERÄT UND -VERFAHREN
DISPOSITIF DE LECTURE D'INTERNET DES OBJETS AMBIANTS, EN PARTICULIER ÉQUIPEMENT UTILISATEUR, SYSTÈME OU RÉSEAU DE COMMUNICATION MOBILE

(43) Date of publication of application: 04.12.2024
(73) Proprietor: Deutsche Telekom AG, 53113 Bonn (DE)
(72) Inventor: KLATT, Axel, 50999 Köln (DE)
(74) Representative: Schwöbel, Thilo K.

(56) References cited:
- WO-A1-2017/053048
- CN-A- 116 195 283
- US-A1- 2019 363 746
- US-A1- 2022 343 569
- "3rd Generation Partnership Project; Technical Specification Group Services and System Aspects; Study on Ambient power-enabled Internet of Things (Release 19)", no. V0.4.0, 9 March 2023 (2023-03-09), pages 1 - 115, XP052283926, Retrieved from the Internet <URL:http://ftp.3gpp.org/Specs/archive/22_series/22.840/22840-110.zip> [retrieved on 20230309]
- TRICCI SO ET AL: "Rel-19 - Study 5G system impacts on supporting Ambient Power-enabled IoT devices", vol. 3GPP SA 2, no. Berlin, DE; 20230522 - 20230526, 12 May 2023 (2023-05-12), XP052318999, Retrieved from the Internet <URL:https://ftp.3gpp.org/Specs/archive/22_series/22.840/22840-110.zip> [retrieved on 20230512]

## Description

### BACKGROUND

The present invention relates a method for using an ambient internet-of-things reader device in a mobile communication network in order to communicate with an ambient internet-of-things tag device, wherein the communication between the ambient internet-of-things reader device and the ambient internet-of-things tag device involves the ambient internet-of-things reader device requesting a piece of requested information from the ambient internet-of-things tag device, the piece of requested information being stored on or within the ambient internet-of-things tag device and the piece of requested information being able to be transmitted, by the ambient internet-of-things tag device, to the ambient internet-of-things reader device.

Furthermore, the present invention relates to an ambient internet-of-things reader device, especially to a user equipment, for being used in a mobile communication network in order to communicate with an ambient internet-of-things tag device, wherein the communication between the ambient internet-of-things reader device and the ambient internet-of-things tag device involves the ambient internet-of-things reader device requesting a piece of requested information from the ambient internet-of-things tag device, the piece of requested information being stored on or within the ambient internet-of-things tag device and the piece of requested information being able to be transmitted, by the ambient internet-of-things tag device, to the ambient internet-of-things reader device.

Additionally, the present invention relates to a system or to a mobile communication network for using an ambient internet-of-things reader device in a mobile communication network in order to communicate with an ambient internet-of-things tag device, wherein the communication between the ambient internet-of-things reader device and the ambient internet-of-things tag device involves the ambient internet-of-things reader device requesting a piece of requested information from the ambient internet-of-things tag device, the piece of requested information being stored on or within the ambient internet-of-things tag device and the piece of requested information being able to be transmitted, by the ambient internet-of-things tag device, to the ambient internet-of-things reader device.

Additionally, the present invention relates to an ambient internet-of-things tag device for communicating with an ambient internet-of-things reader device in a mobile communication network, wherein the communication between the ambient internet-of-things reader device and the ambient internet-of-things tag device involves the ambient internet-of-things reader device requesting a piece of requested information from the ambient internet-of-things tag device, the piece of requested information being stored on or within the ambient internet-of-things tag device and the piece of requested information being able to be transmitted, by the ambient internet-of-things tag device, to the ambient internet-of-things reader device.

Furthermore, the present invention relates to a program and to a computer-readable medium for using an ambient internet-of-things reader device in a mobile communication network in order to communicate with an ambient internet-of-things tag device according to the inventive method.

Mobile communication networks such as public land mobile networks are typically realized as cellular mobile communication networks, i.e. comprising (or using or being associated or assigned to a radio access network comprising) radio cells. Such cellular systems are known conforming to different mobile communication standards or radio access technologies, like 2G/3G/4G/5G/6G radio access technologies (referring to the different generations of radio access technologies) and typically comprise (or consist of) cells (or radio cells) of one or a plurality of the respective radio access technology/radio access technologies.

In addition to and in the context of such conventionally known mobile communication networks, internet-of-things communication technology has been developed and deployed. In this context, ambient-internet-of-things (or ambient loT) technology is also discussed which aims to provide a 3GPP-based radio technology for ultra-cheap communication devices aiming for extending and/or possibly replacing the functionality of RFID tags, e.g., in industrial environments.

Ambient internet-of-things technology especially relates to ambient power-enabled internet-of-things devices, i.e. an internet-of-things device powered by energy harvesting, being either battery-less or with limited energy storage capability, e.g. using only a capacitor instead of a battery, and the energy to power the ambient internet-of-things device is provided through the harvesting of (the energy of) radio waves, light, motion, heat, or any other suitable power source. Typically, ambient internet-of-things devices have lower complexity, smaller size and lower capabilities (and lower power consumption) than typically internet-of-things devices and/or machine type communication devices.

In the context of ambient internet-of-things technology, there is typically an ambient internet-of-things tag device communicating with an ambient internet-of-things reader device, which ambient internet-of-things reader device typically being, or corresponding to, either a specifically enabled or a standard (or generally used or generally available) user equipment used within or connected to a mobile communication network. Such an ambient internet-of-things tag device is, typically, able to communicate bidirectionally with the ambient internet-of-things reader device, i.e. the user equipment. The communication between the user equipment and the ambient internet-of-things tag device typically includes the transmission of ambient internet-of-things (user plane) data and/or ambient internet-of-things signaling (or control) data. Typically, the ambient internet-of-things tag device comprises data or pieces of information such as, e.g., identification information (e.g. relating to the identity or the origin or the destination or other properties of goods associated with or related to the ambient internet-of-things tag device) and/or sensor readings or the like.
Consequently, there is a need to protect and/or to secure such data or such pieces of information, stored on (or in) such ambient internet-of-things tag devices, which need is not satisfied within conventionally known mobile communication networks or ambient internet-of-things implementations as disclosed, e.g., in documents "8rd Generation Partnership Project; Technical Specification Group Services and System Aspects; Study on Ambient power-enabled Internet of Things (Release 19)", 3GPP TR 22.840, V0.4.0 9 (2023-03-09), and US 2019/363746.

### SUMMARY

An object of the present invention is to provide a technically simple, effective and cost-effective solution for using an ambient internet-of-things reader device in a mobile communication network in order to communicate with an ambient internet-of-things tag device in a manner such that data or pieces of information stored on or in such ambient internet-of-things tag devices (or generated by such ambient internet-of-things tag devices) are able to be protected and/or secured. A further object of the present invention is to provide a corresponding ambient internet-of-things reader device, especially a user equipment, a corresponding system or mobile communication network, a corresponding ambient internet-of-things tag device, and a corresponding program and computer-readable medium.

The object of the present invention is achieved by a method according to claim 1.

It is thereby advantageously possible according to the present invention to provide a higher level of protection and/or of security regarding data or pieces of information that are stored on (or in) - or generated by - ambient internet-of-things tag devices. Hence, at least a simple level (but preferably also a more strict level) of security and data protection is able to be realized as it can be assured that not every user equipment being capable of acting as an ambient internet-of-things reader device is able to (or allowed) to read out the data or pieces of information - i.e. get or receive the data or pieces of information, in the following mainly referred to as a piece or pieces of requested information (i.e. of the ambient internet-of-things tag device and requested by the ambient internet-of-things reader device) - stored on or generated by any ambient internet-of-things tag device. It is advantageously possible, according to the present invention, that a certain level of authorization is able to be provided in order to protect the ambient internet-of-things tag devices from fake and/or unauthorized ambient internet-of-things reader devices. In this context, it is generally assumed that, possibly, ambient internet-of-things functionality (i.e. the ability or capability to communicate with ambient internet-of-things tag devices) might be inherently added to any user equipment, especially 5G user equipment - e.g. in a manner similar to Apple's airtag-technology which is using any, e.g., iPhone device for exchanging data, typically using Bluetooth Low Energy (BLE) and/or UltraWideBand (UWB) technology. According to the present invention, by means of using not only the first piece of authentication information (at least eventually located at or within the ambient internet-of-things tag device from the mobile communication network) but by additionally also requiring the second piece of authentication information (that the ambient internet-of-things reader device is required to transmit as part of the request message) in order to (successfully) perform the verification or authentication process in order to obtain the verification or authentication result, it is advantageously possible, according to the present invention, to provide for an increased level of protection and/or of security regarding the piece or pieces of requested information. Hence, a 2-piece authorization of the ambient internet-of-things reader device is used, consisting of one part (first piece of authentication information) which comes from the cellular network ("Network-Auth-Piece") and a second part (second piece of authentication information) that comes from the ambient internet-of-things reader device ("Reader-Auth-Piece") once it tries to read out the ambient internet-of-things tag device. Especially according to the present invention, ambient internet-of-things tag devices and/or ambient internet-of-things reader devices are able to make use of principles from cellular networks and use the benefit that an ambient internet-of-things reader device is able to support, e.g., 5G NR Uu connectivity (as it includes a 5G user equipment incl. the universal integrated circuit card).

The Network-Auth-Piece can either be preconfigured from a cellular network once the ambient internet-of-things tag device is provisioned or the ambient internet-of-things tag device is required - assuming being in cellular network coverage to listen to a configuration message from a dedicated or common control channel. Just before the ambient internet-of-things reader device can read out the piece or pieces of requested information from the ambient internet-of-things tag device it will provide the Reader-Auth-Piece to the ambient internet-of-things tag device, which in turn, before transmitting any uplink message to the ambient internet-of-things tag device, verifies the authentication of that ambient internet-of-things reader device by jointly processing the first and the second piece of authorization information (in the simplest for as, e.g., a mathematical XOR or hash operation). Especially, the second piece of authorization information able to be either provisioned into the ambient internet-of-things reader device by using, e.g., the universal integrated circuit card or part of its information or being provisioned via Uu communication between the authorizing network (i.e. the mobile communication network) and the ambient internet-of-things reader device. If the outcome of the authorization process (i.e. the verification or authentication result) is positive, the ambient internet-of-things reader device is authorized and the ambient internet-of-things tag device can reply to the reading request (or request message) from the ambient internet-of-things reader device by sending the requested uplink information.

Especially according to the present invention, the requested uplink information is or corresponds to an encrypted information, i.e. the ambient internet-of-things reader device might be able to obtain the requested information but this information is rather useless unless the ambient internet-of-things reader device either provides this information to an application server related to this requested information (of the considered ambient internet-of-things tag device, and the application server decrypts the respective data or piece of information) or is provided with credential information (e.g. as part of an application or the like, obtained from, e.g., an application server) in order to be able to decrypt the requested information.

According to the present invention, - in case that the verification or authentication result is positive - the ambient internet-of-things tag device transmits, to the ambient internet-of-things reader device, the piece of requested information and wherein - in case that the verification or authentication result is negative - the ambient internet-of-things tag device either does not transmit a response information, or, it transmits an indication that the verification or authentication result is negative.

By means of the ambient internet-of-things tag device - in case that the verification or authentication result being negative - not transmitting a response information (i.e. not even transmitting an information or a message whose information content consists in saying that the ambient internet-of-things reader device is not authorized to read the requested information), it is possible that the ambient internet-of-things reader device might not know about the existence (or the location) of the ambient internet-of-things tag device. Otherwise, by means of the ambient internet-of-things tag device - in case that the verification or authentication result being negative - transmitting an indication that the verification or authentication result is negative, it is possible to do just that, i.e. to let the ambient internet-of-things reader device (positively) know that it is not authorized to receive the requested information from the ambient internet-of-things tag device.

According to the present invention, it is advantageously furthermore possible and preferred that the ambient internet-of-things tag device comprises the first piece of authentication information by means of being preconfigured with the first piece of authentication information, upon provisioning of the ambient internet-of-things tag device, wherein preconfiguring the ambient internet-of-things tag device involves providing the first piece of authentication information from the mobile communication network.

It is thereby advantageously possible according to the present invention that the ambient internet-of-things tag device is able to be provisioned with the first piece of authentication information; hence, especially and advantageously, no connectivity with the mobile communication network is (strictly) required in order to transmit the first piece of authentication information; however, a connectivity between the ambient internet-of-things tag device and the mobile communication network might nevertheless be advantageous, especially in order to be able to provide for an increased level of protection and/or of security regarding the piece or pieces of requested information.

According to the present invention, it is furthermore advantageously possible and preferred that the ambient internet-of-things tag device receives the first piece of authentication information, from the mobile communication network, by means of using a dedicated or common control channel of the mobile communication network or associated to the mobile communication network, especially by means of a dedicated or common control channel being provided by a network node, especially base station entity, of a radio access network of the mobile communication network.

It is thereby advantageously possible to realize and implement the inventive method in a comparatively simple and efficient manner; especially, it is thereby advantageously possible to be able to repeatedly transmit a (modified or changed) first piece of authentication information to the ambient internet-of-things tag device such as to be able to provide for an increased level of protection and/or of security regarding the authorization (or authentication) of the ambient internet-of-things reader device - e.g. by means of providing for a limited time period of validity of the first piece of authentication information and/or of the second piece of authentication information. Especially, it is advantageously possible that - once the first piece of authentication information is changed or modified by the mobile communication network - also a different second piece of authentication information is required to be provided by the ambient internet-of-things reader device; thereby, an increased level of protection and/or of security regarding the piece or pieces of requested information is able to be realized.

According to the present invention, it is furthermore advantageously possible and preferred that the ambient internet-of-things reader device comprises the second piece of authentication information, or the ambient internet-of-things reader device receives, from the mobile communication network, the second piece of authentication information, wherein especially the ambient internet-of-things reader device corresponds to a user equipment comprising a universal integrated circuit card, wherein the second piece of authentication information is provisioned
-- using the universal integrated circuit card of the ambient internet-of-things reader device, especially using an elementary field for the second piece of authentication information, and/or
-- using a communication via the Uu interface or reference point between the ambient internet-of-things reader device and the mobile communication network.

It is thereby advantageously possible to realize and implement the inventive method in a comparatively simple and efficient manner.

Furthermore, it is advantageously possible and preferred according to the present invention that - as part of the request message being transmitted by the ambient internet-of-things reader device to the ambient internet-of-things tag device - the ambient internet-of-things reader device transmits the second piece of authentication information as well as a request information to return the piece of requested information, wherein especially
-- the second piece of authentication information is transmitted using a first partial message from the ambient internet-of-things reader device to the ambient internet-of-things tag device, and
-- the request information is transmitted using a second partial message from the ambient internet-of-things reader device to the ambient internet-of-things tag device.

It is thereby advantageously possible to realize and implement the inventive method in a comparatively simple and efficient manner.

According to the present invention, the verification or authentication process, performed by the ambient internet-of-things tag device in the third step, involves or corresponds to performing a hash operation to obtain the verification or authentication result, thereby using both the first piece of authentication information and the second piece of authentication information.

It is thereby advantageously possible to realize and implement the inventive method in a comparatively simple and efficient manner and to provide for an increased level of protection and/or of security regarding the piece or pieces of requested information.

Furthermore, the present invention relates to a system or to a mobile communication network, as further defined in claim 6, for using an ambient internet-of-things reader device in a mobile communication network in order to communicate with an ambient internet-of-things tag device.

Furthermore, the present invention relates to an ambient internet-of-things tag device, as further defined in claim 7, for communicating with an ambient internet-of-things reader device in a mobile communication network.

Additionally, the present invention relates to a program, as further defined in claim 8, comprising a computer readable program code.

Still additionally, the present invention relates to a computer-readable medium, as further defined in claim 9, comprising instructions.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

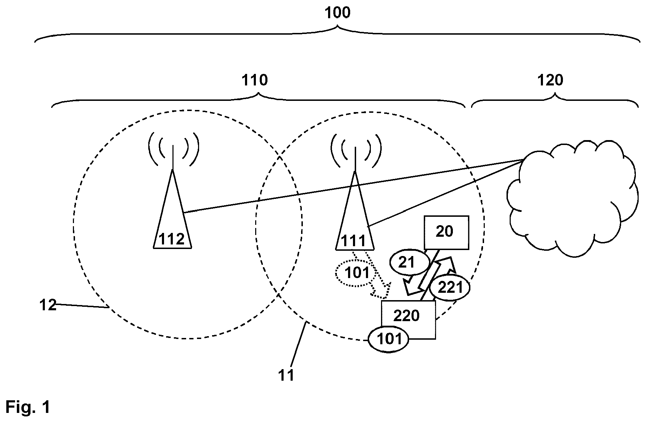

Figure 1 schematically illustrates the situation of an ambient internet-of-things reader device in a mobile communication network, wherein furthermore an ambient internet-of-things tag device is present and wherein the ambient internet-of-things reader device is able to communicate with the ambient internet-of-things tag device, the ambient internet-of-things reader device especially being or corresponding to a user equipment of or connected to the mobile communication network.

### DETAILED DESCRIPTION

The present invention will be described with respect to particular embodiments and with reference to certain drawings, but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, the situation of an ambient internet-of-things reader device 20 in a mobile communication network 100 is schematically shown. Furthermore, an ambient internet-of-things tag device 220 (that might also be realized as, or might also realize the functionality of, a machine type communication device) is present and the ambient internet-of-things reader device 20 is able to communicate with the ambient internet-of-things tag device 220. The ambient internet-of-things reader device 20 especially is a user equipment 20 or corresponds to a user equipment 20 of or connected to the mobile communication network 100. In the example, the mobile communication network 100 comprises an access network 110 and a core network 120. The mobile communication network 100 is preferably a cellular telecommunications network comprising typically a plurality of network cells (or radio cells). According to the present invention, the mobile communication network 100 comprises or uses or is associated or assigned to a radio access network 110, and the radio access network 110 (of the mobile communication network 100) comprises at least one base station entity, but typically a plurality of base station entities. Figure 1 schematically and exemplarily shows a first base station entity 111 and a second base station entity 112. In addition, Figure 1 shows the ambient internet-of-things reader device 20 (or the user equipment 20) as part of the mobile communication network 100, being able to communicate with the base station entity 111 and being located in the vicinity of the ambient internet-of-things tag device 220. In the context of ambient internet-of-things technology, sometimes the ambient internet-of-things tag device 220 is simply called ambient internet-of-things device and the ambient internet-of-things reader device 20 is simply called user equipment; however, in order to differentiate these different functionalities in the context of the present invention mainly the "tag device" vs. "reader device" terminology is used, with the aim of the term of ambient internet-of-things tag device 220 having the meaning of, typically, the less capable (and less powered) device that is generating (or having) data, or providing signaling, to be transmitted to the other device, and the other device either being a (general purpose) user equipment or a specialized device specifically intended to receive such data or signaling.

As the ambient internet-of-things reader device 20 is connected to the mobile communication network 100, it is preferred that also the ambient internet-of-things tag device 220 is likewise connected to the mobile communication network 100, or, at least, able to receive data or pieces of information (in downlink direction) from the mobile communication network 100, i.e. data or pieces of information that are either broadcast, by the mobile communication network 100, specifically to ambient internet-of-things tag devices 220 (or to other internet-of-things devices), or, alternatively, data or pieces of information that are transmitted, to the ambient internet-of-things tag device 220 in a dedicated manner. Of course, in addition to receiving such data or pieces of information from the mobile communication network 100, the ambient internet-of-things tag device 220 might also be able (albeit not mandatorily) to send (typically other) data or pieces of information (in uplink direction) to the mobile communication network 100.
However, while it is preferred that the ambient internet-of-things tag device 220 is continuously connected (or quasi-continuously, i.e. repeatedly at least every couple of seconds or, at most, every couple of tens of seconds) to the mobile communication network 100, it is, in general, not mandatory, according to the present invention, that the ambient internet-of-things tag device 220 is continuously (or quasi-continuously) connected to the mobile communication network 100.
In addition to the reception of such data or pieces of information (in downlink direction) from the mobile communication network 100 (of course using radiofrequency signals carrying these data or pieces of information), the ambient internet-of-things tag device 220 is, typically, able to receive radiofrequency signals in a more general manner in order to harvest energy, such radiofrequency signals originating either from the mobile communication network 100 or from other mobile communication networks or from other devices transmitting radiofrequency signals, such as the ambient internet-of-things reader device 20 being used as a user equipment 20, or from other user equipments in the vicinity.

According to the present invention and in the exemplary situation shown in Figure 1, the communication between the ambient internet-of-things reader device 20 and the ambient internet-of-things tag device 220 involves the ambient internet-of-things reader device 20 requesting a piece of requested information 221 from the ambient internet-of-things tag device 220. The piece of requested information 221 is stored on or within the ambient internet-of-things tag device 220 - at least temporarily, e.g. after having been generated, for example as a sensor reading or the like - and the piece of requested information 221 is able to be transmitted, by the ambient internet-of-things tag device 220, to the ambient internet-of-things reader device 20. However, according to the present invention, the requested information 221 is, especially partly or completely, withheld from being transmitted, by the ambient internet-of-things tag device 220, to the ambient internet-of-things reader device 20 in case that the ambient internet-of-things reader device 20 is not able to be sufficiently authorized (especially by the ambient internet-of-things tag device 220 itself).
Hence, according to the present invention, in order to use the ambient internet-of-things reader device 20 to communicate with the ambient internet-of-things tag device 220, the inventive method comprises the following steps:
-- in a first step, the ambient internet-of-things tag device 220 comprises a first piece of authentication information 101 - or the ambient internet-of-things tag device 220 receives, from the mobile communication network 100, the first piece of authentication information 101 - ,
-- in a second step, the ambient internet-of-things reader device 20 transmits a request message, to the ambient internet-of-things tag device 220, the request message comprising a second piece of authentication information 21,
-- in a third step, the ambient internet-of-things tag device 220 performs a verification or authentication process, wherein the verification or authentication process involves using both the first piece of authentication information 101 and the second piece of authentication information 21 in order to obtain a verification or authentication result, wherein, dependent on the verification or authentication result, the ambient internet-of-things reader device 20 receives, from the ambient internet-of-things tag device 220, the piece of requested information 221 or another information or no information at all.
In case that the verification or authentication result is positive or affirmative, the ambient internet-of-things tag device 220 especially transmits, to the ambient internet-of-things reader device 20, the piece of requested information 221; alternatively - in case that the verification or authentication result is negative - the ambient internet-of-things tag device 220 especially either does not transmit a response information (at all), or, it transmits an indication that the verification or authentication result is negative.
Hence, in any case the requested information 221 is (partly or completely) withheld from being transmitted to the ambient internet-of-things reader device 20 in case of insufficient authorization of the ambient internet-of-things reader device 20.

At least at the time of the ambient internet-of-things tag device 220 performing the verification or authentication process (involving both the first piece of authentication information 101 and the second piece of authentication information 21), the ambient internet-of-things tag device 220 needs to comprise the first piece of authentication information 101. According to a first kind of variants of (the inventive method of) the present invention, the ambient internet-of-things tag device 220 comprises the first piece of authentication information 101, e.g. by means of being preconfigured with the first piece of authentication information 101, especially upon provisioning or configuring of the ambient internet-of-things tag device 220 (this is represented, in Figure 2, by means of reference sign 101 being encircled by means of a drawn-through line and as part of the ambient internet-of-things tag device 220). According to a second kind of variants of (the inventive method of) the present invention, the ambient internet-of-things tag device 220 receives the first piece of authentication information 101, from the mobile communication network 100, especially at some point in time prior to performing the verification or authentication process in the third step according to the inventive method (this is represented, in Figure 2, by means of reference sign 101 being encircled by means of a dotted line as part of a (likewise dotted) arrow being directed from the base station entity 111 towards the ambient internet-of-things tag device 220). The ambient internet-of-things tag device 220 might receive the first piece of authentication information 101, e.g., by means of using a dedicated or common control channel of the mobile communication network 100 or a dedicated or common control channel associated to the mobile communication network 100, especially by means of a dedicated or common control channel being provided by a network node 111, especially base station entity, of a radio access network 110 of the mobile communication network 100.

Preferably according to the present invention, the ambient internet-of-things reader device 20 comprises the second piece of authentication information 21, or the ambient internet-of-things reader device 20 receives, from the mobile communication network 100, the second piece of authentication information 21. Furthermore preferably, the ambient internet-of-things reader device 20 corresponds to a user equipment comprising a universal integrated circuit card, wherein the second piece of authentication information 21 is provisioned
-- using the universal integrated circuit card of the ambient internet-of-things reader device 20, especially using an elementary field for the second piece of authentication information 21, and/or
-- using a communication via the Uu interface or reference point between the ambient internet-of-things reader device 20 and the mobile communication network 100.

According to the present invention, the communication between the ambient internet-of-things reader device and the ambient internet-of-things tag device is able to implemented according to a variety of different embodiments: According to one embodiment, the request message (of the ambient internet-of-things reader device 20 to the ambient internet-of-things tag device 220) consists of just one message comprising both the second piece of authentication information 21 and the request information to request, at the ambient internet-of-things tag device, to return the piece of requested information 221. Alternatively, according to another embodiment, the ambient internet-of-things reader device 20 might also use a first partial message to transmit the second piece of authentication information to the ambient internet-of-things tag device and a separate second partial message to transmit the request information to the ambient internet-of-things tag device 220; of course, the first partial message might occur (or be sent) first, and the second partial message second or vice versa.

According to the present invention, the verification or authentication process, performed by the ambient internet-of-things tag device 220 in the third step, involves or corresponds to one out of the following:
-- jointly processing both the first piece of authentication information 101 and the second piece of authentication information 21,
-- performing a mathematical exclusive disjunction, or exclusive-or, operation and/or a hash operation to obtain the verification or authentication result, especially thereby using both the first piece of authentication information 101 and the second piece of authentication information 21,
-- using a message authentication code, MAC, especially involving a cryptographic hash function.
Furthermore, it is especially preferred, according to the present invention, that the requested uplink information is or corresponds to an encrypted information, i.e. that the ambient internet-of-things tag device applies an encryption procedure regarding the requested information potentially transmitted to the ambient internet-of-things reader device.

## Claims

1. Method for using an ambient internet-of-things reader device (20), corresponding to a user equipment comprising a universal integrated circuit card, in a mobile communication network (100) in order to communicate with an ambient internet-of-things tag device (220), the ambient internet-of-things tag device (220) corresponding to an ambient power-enabled internet-of-things device,
wherein the ambient internet-of-things tag device is able to communicate bidirectionally with the ambient internet-of-things reader device,
wherein the communication between the ambient internet-of-things reader device (20) and the ambient internet-of-things tag device (220) involves the ambient internet-of-things reader device (20) requesting a piece of requested information (221) from the ambient internet-of-things tag device (220), the piece of requested information (221) being stored on the ambient internet-of-things tag device (220) and the piece of requested information (221) being able to be transmitted, by the ambient internet-of-things tag device (220), to the ambient internet-of-things reader device (20),
wherein, in order to use the ambient internet-of-things reader device (20) to communicate with the ambient internet-of-things tag device (220), the method comprises the following steps:
-- in a first step, the ambient internet-of-things tag device (220) comprises a first piece of authentication information (101) - or the ambient internet-of-things tag device (220) receives, from the mobile communication network (100), the first piece of authentication information (101) - ,
-- in a second step, the ambient internet-of-things reader device (20 transmits a request message, to the ambient internet-of-things tag device (220), the request message comprising a second piece of authentication information (21),
-- in a third step, the ambient internet-of-things tag device (220) performs a verification or authentication process, wherein the verification or authentication process involves using both the first piece of authentication information (101) and the second piece of authentication information (21) and performing a hash operation, in order to obtain a verification or authentication result, wherein, - in case that the verification or authentication result is positive - the ambient internet-of-things tag device (220) transmits, to the ambient internet-of-things reader device (20), the piece of requested information (221) and wherein - in case that the verification or authentication result is negative - the ambient internet-of-things tag device (220) either does not transmit a response information, or, it transmits an indication that the verification or authentication result is negative.

2. Method according to one of the preceding claims, wherein the ambient internet-of-things tag device (220) comprises the first piece of authentication information (101) by means of being preconfigured with the first piece of authentication information (101), upon provisioning of the ambient internet-of-things tag device (220), wherein preconfiguring the ambient internet-of-things tag device (220) involves providing the first piece of authentication information (101) from the mobile communication network (100).

3. Method according to one of the preceding claims, wherein the ambient internet-of-things tag device (220) receives the first piece of authentication information (101), from the mobile communication network (100), by means of using a dedicated or common control channel of the mobile communication network (100).

4. Method according to one of the preceding claims, wherein the ambient internet-of things reader device (20) comprises the second piece of authentication information (21), or the ambient internet-of-things reader device (20) receives, from the mobile communication network (100), the second piece of authentication information (21),
wherein the ambient internet-of-things reader device (20) corresponds to the user equipment comprising the universal integrated circuit card, wherein the second piece of authentication information (21) is provisioned
-- using the universal integrated circuit card of the ambient internet-of-things reader device (20), especially using an elementary field for the second piece of authentication information (21), and/or
-- using a communication via the Uu interface point between the ambient internet-of-things reader device (20) and the mobile communication network (100)

5. Method according to one of the preceding claims, wherein - as part of the request message being transmitted by the ambient internet-of-things reader device (20) to the ambient internet-of-things tag device (220) - the ambient internet-of-things reader device (20) transmits the second piece of authentication information (21) as well as a request information to return the piece of requested information (221), wherein
-- the second piece of authentication information (21) is transmitted using a first partial message from the ambient internet-of-things reader device (20) to the ambient internet-of-things tag device (220), and
-- the request information is transmitted using a second partial message from the ambient internet-of-things reader device (20) to the ambient internet-of-things tag device (220).

6. System or mobile communication network (100) for using an ambient internet-of-things reader device (20), corresponding to a user equipment comprising a universal integrated circuit card, in the mobile communication network (100) in order to communicate with an ambient internet-of-things tag device (220), the system or mobile communication network (100) comprising the ambient internet-of-things reader device (20) and the ambient internet-of-things tag device (220), wherein the ambient internet-of-things tag device is able to communicate bidirectionally with the ambient internet-of-things reader device,
wherein the communication between the ambient internet-of-things reader device (20) and the ambient internet-of-things tag device (220) involves the ambient internet-of-things reader device (20) requesting a piece of requested information (221) from the ambient internet-of-things tag device (220), the piece of requested information (221) being stored on or within the ambient internet-of-things tag device (220) and the piece of requested information (221) being able to be transmitted, by the ambient internet-of-things tag device (220), to the ambient internet-of-things reader device (20),
wherein, in order to use the ambient internet-of-things reader device (20) to communicate with the ambient internet-of-things tag device (220), the system or mobile communication network (100) is configured such that:
-- the ambient internet-of-things tag device (220) comprises a first piece of authentication information (101) - or the ambient internet-of-things tag device (220) receives, from the mobile communication network (100), the first piece of authentication information (101) - ,
-- the ambient internet-of-things reader device (20) transmits a request message, to the ambient internet-of-things tag device (220), the request message comprising a second piece of authentication information (21),
-- the ambient internet-of-things tag device (220) performs a verification or authentication process, wherein the verification or authentication process involves using both the first piece of authentication information (101) and the second piece of authentication information (21) and performing a hash operation in order to obtain a verification or authentication result, wherein, , - in case that the verification or authentication result is positive - the ambient internet-of-things tag device (220) transmits, to the ambient internet-of-things reader device (20), the piece of requested information (221) and wherein - in case that the verification or authentication result is negative - the ambient internet-of-things tag device (220) either does not transmit a response information, or, it transmits an indication that the verification or authentication result is negative.

7. Ambient internet-of-things tag device (220) for communicating with an ambient internet-of-things reader device (20), corresponding to a user equipment comprising a universal integrated circuit card, in a mobile communication network (100),
wherein the communication between the ambient internet-of-things reader device (20) and the ambient internet-of-things tag device (220) involves the ambient internet-of-things tag device (220) receiving a request regarding a piece of requested information (221) from the ambient internet-of-things reader device (20), the piece of requested information (221) being stored on the ambient internet-of-things tag device (220) and the piece of requested information (221) being able to be transmitted, by the ambient internet-of-things tag device (220), to the ambient internet-of-things reader device (20),
wherein, in order to use the ambient internet-of-things tag device (220) with the ambient internet-of-things reader device (20), the ambient internet-of-things tag device (220) is configured such that:
-- the ambient internet-of-things tag device (220) comprises a first piece of authentication information (101) - or the ambient internet-of-things tag device (220) receives, from the mobile communication network (100), the first piece of authentication information (101) - ,
-- the ambient internet-of-things tag device (220) receives a request message, from the ambient internet-of-things reader device (20), the request message comprising a second piece of authentication information (21),
-- the ambient internet-of-things tag device (220) performs a verification or authentication process, wherein the verification or authentication process involves using both the first piece of authentication information (101) and the second piece of authentication information (21) and performing a hash operation in order to obtain a verification or authentication result, wherein, , - in case that the verification or authentication result is positive - the ambient internet-of-things tag device (220) transmits, to the ambient internet-of-things reader device (20), the piece of requested information (221) and wherein - in case that the verification or authentication result is negative - the ambient internet-of-things tag device (220) either does not transmit a response information, or, it transmits an indication that the verification or authentication result is negative.

8. Program comprising a computer readable program code, which, when executed by a computer system comprising: at least an ambient internet-of-things reader device (20); and an ambient internet-of-things tag device (220): causes the computer system to perform a method according one of claims 1 to 5.

9. Computer-readable medium comprising instructions which when executed on a computer system comprising: at least an ambient internet-of-things reader device (20); and an ambient internet-of-things tag device (220) causes the computer system to perform a method according one of claims 1 to 5.

## Patentansprüche

1. Verfahren zur Verwendung einer Umgebungs-Internet-of-Things-Readervorrichtung (20), die einer Benutzerausrüstung entspricht, die eine Universal Integrated Circuit Card umfasst, in einem Mobilkommunikationsnetz (100), um mit einer Umgebungs-Internet-of-Things-Tagvorrichtung (220) zu kommunizieren, wobei die Umgebungs-Internet-of-Things-Tagvorrichtung (220) einer durch Umgebungsenergie aktivierten Internet-of-Things-Vorrichtung entspricht, wobei die Umgebungs-Internet-of-Things-Tagvorrichtung in der Lage ist, bidirektional mit der Umgebungs-Internet-of-Things-Readervorrichtung zu kommunizieren,
wobei die Kommunikation zwischen der Umgebungs-Internet-of-Things-Readervorrichtung (20) und der Umgebungs-Internet-of-Things-Tagvorrichtung (220) impliziert, dass die Umgebungs-Internet-of-Things-Readervorrichtung (20) ein angefordertes Informationselement (221) von der Umgebungs-Internet-of-Things-Tagvorrichtung (220) anfordert, wobei das angeforderte Informationselement (221) auf der Umgebungs-Internet-of-Things-Tagvorrichtung (220) gespeichert wird und wobei das angeforderte Informationselement (221) in der Lage ist, durch die Umgebungs-Internet-of-Things-Tagvorrichtung (220) an die Umgebungs-Internet-of-Things-Readervorrichtung (20) gesendet zu werden,
wobei, um die Umgebungs-Internet-of-Things-Readervorrichtung (20) zum Kommunizieren mit der Umgebungs-Internet-of-Things-Tag-Vorrichtung (220) zu verwenden, das Verfahren die folgenden Schritte umfasst:
- in einem ersten Schritt umfasst die Umgebungs-Internet-of-Things-Tagvorrichtung (220) ein erstes Authentifizierungsinformationselement (101) - oder die Umgebungs-Internet-of-Things-Tagvorrichtung (220) empfängt von dem Mobilkommunikationsnetz (100) das erste Authentifizierungsinformationselement (101),
- in einem zweiten Schritt sendet die Umgebungs-Internet-of-Things-Readervorrichtung (20) eine Anforderungsnachricht an die Umgebungs-Internet-of-Things-Tagvorrichtung (220), wobei die Anforderungsnachricht ein zweites Authentifizierungsinformationselement (21) umfasst,
- in einem dritten Schritt führt die Umgebungs-Internet-of-Things-Tagvorrichtung (220) einen Verifizierungs- oder Authentifizierungsprozess durch, wobei der Verifizierungs- oder Authentifizierungsprozess das Verwenden sowohl des ersten Authentifizierungsinformationselements (101) als auch des zweiten Authentifizierungsinformationselements (21) und das Durchführen einer Hash-Operation impliziert, um ein Verifizierungs- oder Authentifizierungsergebnis zu erhalten, wobei - für den Fall, dass das Verifizierungs- oder Authentifizierungsergebnis positiv ist - die Umgebungs-Internet-of-Things-Tagvorrichtung (220) das angeforderte Informationselement (221) an die Umgebungs-Internet-of-Things-Readervorrichtung (20) sendet, und wobei - für den Fall, dass das Verifizierungs- oder Authentifizierungsergebnis negativ ist, die Umgebungs-Internet-of-Things-Tagvorrichtung (220) entweder keine Antwortinformation sendet oder eine Angabe sendet, dass das Verifizierungs- oder Authentifizierungsergebnis negativ ist.

2. Verfahren nach einem der vorangehenden Ansprüche, wobei die Umgebungs-Internet-of-Things-Tagvorrichtung (220) das erste Authentifizierungsinformationselement (101) umfasst, indem sie beim Bereitstellen der Umgebungs-Internet-of-Things-Tagvorrichtung (220) mit dem ersten Authentifizierungsinformationselement (101) vorkonfiguriert wird, wobei das Vorkonfigurieren der Umgebungs-Internet-of-Things-Tagvorrichtung (220) das Bereitstellen des ersten Authentifizierungsinformationselements (101) aus dem Mobilkommunikationsnetz (100) impliziert.

3. Verfahren nach einem der vorangehenden Ansprüche, wobei die Umgebungs-Internet-of-Things-Tagvorrichtung (220) das erste Authentifizierungsinformationselement (101) aus dem Mobilkommunikationsnetz (100) unter Verwendung eines dedizierten oder gemeinsamen Steuerkanals des Mobilkommunikationsnetzes (100) empfängt.

4. Verfahren nach einem der vorangehenden Ansprüche, wobei die Umgebungs-Internet-of-Things-Readervorrichtung (20) das zweite Authentifizierungsinformationselement (21) umfasst oder die Umgebungs-Internet-of-Things-Readervorrichtung (20) das zweite Authentifizierungsinformationselement (21) aus dem Mobilkommunikationsnetz (100) empfängt,
wobei die Umgebungs-Internet-of-Things-Readervorrichtung (20) der Benutzerausrüstung entspricht, die die Universal Integrated Circuit Card umfasst, wobei das zweite Authentifizierungsinformationselement (21) bereitgestellt wird
- unter Verwendung der Universal Integrated Circuit Card der Umgebungs-Internet-of-Things-Readervorrichtung (20), insbesondere unter Verwendung eines elementaren Feldes für das zweite Authentifizierungsinformationselement (21), und/oder
- unter Verwendung einer Kommunikation über den Uu-Schnittstellenpunkt zwischen der Umgebungs-Internet-of-Things-Readervorrichtung (20) und dem Mobilkommunikationsnetz (100).

5. Verfahren nach einem der vorangehenden Ansprüche, wobei - als Teil der Anforderungsnachricht, die durch die Umgebungs-Internet-of-Things-Readervorrichtung (20) an die Umgebungs-Internet-of-Things-Tagvorrichtung (220) gesendet wird - die Umgebungs-Internet-of-Things-Readervorrichtung (20) das zweite Authentifizierungsinformationselement (21) sowie eine Anforderungsinformation zum Zurücksenden des angeforderten Informationselements (221) sendet, wobei
- das zweite Authentifizierungsinformationselement (21) unter Verwendung einer ersten Teilnachricht von der Umgebungs-Internet-of-Things-Readervorrichtung (20) an die Umgebungs-Internet-of-Things-Tagvorrichtung (220) gesendet wird, und
- die Anforderungsinformation unter Verwendung einer zweiten Teilnachricht von der Umgebungs-Internet-of-Things-Readervorrichtung (20) an die Umgebungs-Internet-of-Things-Tagvorrichtung (220) gesendet wird.

6. System oder Mobilkommunikationsnetz (100) zur Verwendung einer Umgebungs-Internet-of-Things-Readervorrichtung (20), die einer Benutzerausrüstung entspricht, die eine Universal Integrated Circuit Card umfasst, in dem Mobilkommunikationsnetz (100), um mit einer Umgebungs-Internet-of-Things-Tagvorrichtung (220) zu kommunizieren, wobei das System oder Mobilkommunikationsnetz (100) die Umgebungs-Internet-of-Things-Readervorrichtung (20) und die Umgebungs-Internet-of-Things-Tagvorrichtung (220) umfasst, wobei die Umgebungs-Internet-of-Things-Tagvorrichtung in der Lage ist, bidirektional mit der Umgebungs-Internet-of-Things-Readervorrichtung zu kommunizieren,
wobei die Kommunikation zwischen der Umgebungs-Internet-of-Things-Readervorrichtung (20) und der Umgebungs-Internet-of-Things-Tagvorrichtung (220) impliziert, dass die Umgebungs-Internet-of-Things-Readervorrichtung (20) ein angefordertes Informationselement (221) von der Umgebungs-Internet-of-Things-Tagvorrichtung (220) anfordert, wobei das angeforderte Informationselement (221) auf oder innerhalb der Umgebungs-Internet-of-Things-Tagvorrichtung (220) gespeichert wird und wobei das angeforderte Informationselement (221) in der Lage ist, durch die Umgebungs-Internet-of-Things-Tagvorrichtung (220) an die Umgebungs-Internet-of-Things-Readervorrichtung (20) gesendet zu werden,
wobei, um die Umgebungs-Internet-of-Things-Readervorrichtung (20) zum Kommunizieren mit der Umgebungs-Internet-of-Things-Tag-Vorrichtung (220) zu verwenden, das System oder das Mobilkommunikationsnetz (100) so eingerichtet ist, dass:
- die Umgebungs-Internet-of-Things-Tagvorrichtung (220) ein erstes Authentifizierungsinformationselement (101) umfasst - oder die Umgebungs-Internet-of-Things-Tagvorrichtung (220) von dem Mobilkommunikationsnetz (100) das erste Authentifizierungsinformationselement (101) empfängt,
- die Umgebungs-Internet-of-Things-Readervorrichtung (20) eine Anforderungsnachricht an die Umgebungs-Internet-of-Things-Tagvorrichtung (220) sendet, wobei die Anforderungsnachricht ein zweites Authentifizierungsinformationselement (21) umfasst,
- die Umgebungs-Internet-of-Things-Tagvorrichtung (220) einen Verifizierungs- oder Authentifizierungsprozess durchführt, wobei der Verifizierungs- oder Authentifizierungsprozess das Verwenden sowohl des ersten Authentifizierungsinformationselements (101) als auch des zweiten Authentifizierungsinformationselements (21) und das Durchführen einer Hash-Operation impliziert, um ein Verifizierungs- oder Authentifizierungsergebnis zu erhalten, wobei - für den Fall, dass das Verifizierungs- oder Authentifizierungsergebnis positiv ist - die Umgebungs-Internet-of-Things-Tagvorrichtung (220) das angeforderte Informationselement (221) an die Umgebungs-Internet-of-Things-Readervorrichtung (20) sendet, und wobei - für den Fall, dass das Verifizierungs- oder Authentifizierungsergebnis negativ ist - die Umgebungs-Internet-of-Things-Tagvorrichtung (220) entweder keine Antwortinformation sendet oder eine Angabe sendet, dass das Verifizierungs- oder Authentifizierungsergebnis negativ ist.

7. Umgebungs-Internet-of-Things-Tagvorrichtung (220) zum Kommunizieren mit einer Umgebungs-Internet-of-Things-Readervorrichtung (20), die einer Benutzerausrüstung entspricht, die eine Universal Integrated Circuit Card umfasst, in einem Mobilkommunikationsnetz (100),
wobei die Kommunikation zwischen der Umgebungs-Internet-of-Things-Readervorrichtung (20) und der Umgebungs-Internet-of-Things-Tagvorrichtung (220) impliziert, dass die Umgebungs-Internet-of-Things-Tagvorrichtung (220) eine Anforderung bezüglich eines angeforderten Informationselements (221) von der Umgebungs-Internet-of-Things-Readervorrichtung (20) empfängt, wobei das angeforderte Informationselement (221) auf der Umgebungs-Internet-of-Things-Tagvorrichtung (220) gespeichert wird und wobei das angeforderte Informationselement (221) in der Lage ist, durch die Umgebungs-Internet-of-Things-Tagvorrichtung (220) an die Umgebungs-Internet-of-Things-Readervorrichtung (20) gesendet zu werden,
wobei, um die Umgebungs-Internet-of-Things-Tagvorrichtung (220) mit der Umgebungs-Internet-of-Things-Readervorrichtung (20) zu verwenden, die Umgebungs-Internet-of-Things-Tagvorrichtung (220) so eingerichtet ist, dass:
- die Umgebungs-Internet-of-Things-Tagvorrichtung (220) ein erstes Authentifizierungsinformationselement (101) umfasst - oder die Umgebungs-Internet-of-Things-Tagvorrichtung (220) von dem Mobilkommunikationsnetz (100) das erste Authentifizierungsinformationselement (101) empfängt,
- die Umgebungs-Internet-of-Things-Tagvorrichtung (220) eine Anforderungsnachricht von der Umgebungs-Internet-of-Things-Readervorrichtung (20) empfängt, wobei die Anforderungsnachricht ein zweites Authentifizierungsinformationselement (21) umfasst,
- die Umgebungs-Internet-of-Things-Tagvorrichtung (220) einen Verifizierungs- oder Authentifizierungsprozess durchführt, wobei der Verifizierungs- oder Authentifizierungsprozess das Verwenden sowohl des ersten Authentifizierungsinformationselements (101) als auch des zweiten Authentifizierungsinformationselements (21) und das Durchführen einer Hash-Operation impliziert, um ein Verifizierungs- oder Authentifizierungsergebnis zu erhalten, wobei - für den Fall, dass das Verifizierungs- oder Authentifizierungsergebnis positiv ist - die Umgebungs-Internet-of-Things-Tagvorrichtung (220) das angeforderte Informationselement (221) an die Umgebungs-Internet-of-Things-Readervorrichtung (20) sendet, und wobei - für den Fall, dass das Verifizierungs- oder Authentifizierungsergebnis negativ ist - die Umgebungs-Internet-of-Things-Tagvorrichtung (220) entweder keine Antwortinformation sendet oder eine Angabe sendet, dass das Verifizierungs- oder Authentifizierungsergebnis negativ ist.

8. Programm, umfassend einen computerlesbaren Programmcode, der, wenn er durch ein Computersystem ausgeführt wird, umfassend: mindestens eine Umgebungs-Internet-of-Things-Readervorrichtung (20) und eine Umgebungs-Internet-of-Things-Tagvorrichtung (220): das Computersystem veranlasst, ein Verfahren nach einem der Ansprüche 1 bis 5 durchzuführen.

9. Computerlesbares Medium, umfassend Instruktionen, die, wenn sie auf einem Computersystem ausgeführt werden, umfassend: mindestens eine Umgebungs-Internet-of-Things-Readervorrichtung (20); und eine Umgebungs-Internet-of-Things-Tagvorrichtung (220), das Computersystem veranlassen, ein Verfahren nach einem der Ansprüche 1 bis 5 durchzuführen.

## Revendications

1. Procédé d'utilisation d'un dispositif de lecture de l'Internet des objets ambiant (20), correspondant à un équipement d'utilisateur comprenant une carte à circuit intégré universelle, dans un réseau de communication mobile (100) afin de communiquer avec un dispositif d'étiquette de l'Internet des objets ambiant (220), le dispositif d'étiquette de l'Internet des objets ambiant (220) correspondant à un dispositif de l'Internet des objets activé par l'énergie ambiante, dans lequel le dispositif d'étiquette de l'Internet des objets ambiant est capable de communiquer de manière bidirectionnelle avec le dispositif de lecture de l'Internet des objets ambiant,
dans lequel la communication entre le dispositif de lecture de l'Internet des objets ambiant (20) et le dispositif d'étiquette de l'Internet des objets ambiant (220) implique que le dispositif de lecture de l'Internet des objets ambiant (20) demande un élément d'information requis (221) au dispositif d'étiquette de l'Internet des objets ambiant (220), l'élément d'information requis (221) est stocké sur le dispositif d'étiquette de l'Internet des objets ambiant (220) et l'élément d'information requis (221) peut être transmis, par le dispositif d'étiquette de l'Internet des objets ambiant (220), au dispositif de lecture de l'Internet des objets ambiant (20),
dans lequel, afin d'utiliser le dispositif de lecture de l'Internet des objets ambiant (20) pour communiquer avec le dispositif d'étiquette de l'Internet des objets ambiant (220), le procédé comprend les étapes suivantes :
- dans une première étape, le dispositif d'étiquette de l'Internet des objets ambiant (220) comprend un premier élément d'information d'authentification (101) - ou le dispositif d'étiquette de l'Internet des objets ambiant (220) reçoit, à partir du réseau de communication mobile (100), le premier élément d'information d'authentification (101),
- dans une deuxième étape, le dispositif de lecture de l'Internet des objets ambiant (20) transmet un message de demande, au dispositif d'étiquette de l'Internet des objets ambiant (220), le message de demande comprenant un second élément d'information d'authentification (21),
- dans une troisième étape, le dispositif d'étiquette de l'Internet des objets ambiant (220) effectue un processus de vérification ou d'authentification, dans lequel le processus de vérification ou d'authentification implique l'utilisation à la fois du premier élément d'information d'authentification (101) et du second élément d'information d'authentification (21) et l'effection d'une opération de hachage, afin d'obtenir un résultat de vérification ou d'authentification, dans lequel, - dans le cas où le résultat de vérification ou d'authentification est positif - le dispositif d'étiquette de l'Internet des objets ambiant (220) transmet, au dispositif de lecture de l'Internet des objets ambiant (20), l'élément d'information requis (221) et dans lequel - dans le cas où le résultat de la vérification ou de l'authentification est négatif - le dispositif d'étiquette de l'Internet des objets ambiant (220) soit ne transmet pas d'informations de réponse, soit transmet une indication selon laquelle le résultat de la vérification ou de l'authentification est négatif.

2. Procédé selon l'une des revendications précédentes, dans lequel le dispositif d'étiquette de l'Internet des objets ambiant (220) comprend le premier élément d'information d'authentification (101) du fait qu'il est préconfiguré avec le premier élément d'information d'authentification (101) lors de la mise en service du dispositif d'étiquette de l'Internet des objets ambiant (220), dans lequel la préconfiguration du dispositif d'étiquette de l'Internet des objets ambiant (220) implique la fourniture du premier élément d'information d'authentification (101) à partir du réseau de communication mobile (100).

3. Procédé selon l'une des revendications précédentes, dans lequel le dispositif d'étiquette de l'Internet des objets ambiant (220) reçoit le premier élément d'information d'authentification (101), à partir du réseau de communication mobile (100), en utilisant un canal de commande dédié ou commun du réseau de communication mobile (100).

4. Procédé selon l'une des revendications précédentes, dans lequel le dispositif de lecture de l'Internet des objets ambiant (20) comprend le second élément d'information d'authentification (21), ou le dispositif de lecture de l'Internet des objets ambiant (20) reçoit, à partir du réseau de communication mobile (100), le second élément d'information d'authentification (21),
dans lequel le dispositif de lecture de l'Internet des objets ambiant (20) correspond à l'équipement d'utilisateur comprenant la carte à circuit intégré universelle, dans lequel le second élément d'information d'authentification (21) est fourni
- en utilisant la carte à circuit intégré universelle du dispositif de lecture de l'Internet des objets ambiant (20), notamment en utilisant un champ élémentaire pour le second élément d'information d'authentification (21), et/ou
- en utilisant une communication par l'intermédiaire du point d'interface Uu entre le dispositif de lecture de l'Internet des objets ambiant (20) et le réseau de communication mobile (100).

5. Procédé selon l'une des revendications précédentes, dans lequel - en tant que partie du message de demande transmis par le dispositif de lecture de l'Internet des objets ambiant (20) au dispositif d'étiquette de l'Internet des objets ambiant (220) - le dispositif de lecture de l'Internet des objets ambiant (20) transmet le second élément d'information d'authentification (21) ainsi qu'une information de demande pour renvoyer l'élément d'information requis (221), dans lequel
- le second élément d'information d'authentification (21) est transmis à l'aide d'un premier message partiel à partir du dispositif de lecture de l'Internet des objets ambiant (20) au dispositif d'étiquette de l'Internet des objets ambiant (220), et
- l'information de demande est transmise à l'aide d'un second message partiel à partir du dispositif de lecture de l'Internet des objets ambiant (20) au dispositif d'étiquette de l'Internet des objets ambiant (220).

6. Système ou réseau de communication mobile (100) permettant d'utiliser un dispositif de lecture de l'Internet des objets ambiant (20), correspondant à un équipement d'utilisateur comprenant une carte à circuit intégré universelle, dans le réseau de communication mobile (100) afin de communiquer avec un dispositif d'étiquette de l'Internet des objets ambiant (220), le système ou réseau de communication mobile (100) comprenant le dispositif de lecture de l'Internet des objets ambiant (20) et le dispositif d'étiquette de l'Internet des objets ambiant (220), dans lequel le dispositif d'étiquette de l'Internet des objets ambiant est capable de communiquer de manière bidirectionnelle avec le dispositif de lecture de l'Internet des objets ambiant,
dans lequel la communication entre le dispositif de lecture de l'Internet des objets ambiant (20) et le dispositif d'étiquette de l'Internet des objets ambiant (220) implique que le dispositif de lecture de l'Internet des objets ambiant (20) demande un élément d'information requis (221) au dispositif d'étiquette de l'Internet des objets ambiant (220), l'élément d'information requis (221) étant stocké sur ou dans le dispositif d'étiquette de l'Internet des objets ambiant (220) et l'élément d'information requis (221) pouvant être transmis, par le dispositif d'étiquette de l'Internet des objets ambiant (220), au dispositif de lecture de l'Internet des objets ambiant (20),
dans lequel, afin d'utiliser le dispositif de lecture de l'Internet des objets ambiant (20) pour communiquer avec le dispositif d'étiquette de l'Internet des objets ambiant (220), le système ou le réseau de communication mobile (100) est configuré de telle sorte que :
- le dispositif d'étiquette de l'Internet des objets ambiant (220) comprend un premier élément d'information d'authentification (101) - ou le dispositif d'étiquette de l'Internet des objets ambiant (220) reçoit, à partir du réseau de communication mobile (100), le premier élément d'information d'authentification (101),
- le dispositif de lecture de l'Internet des objets ambiant (20) transmet un message de demande, au dispositif d'étiquette de l'Internet des objets ambiant (220), le message de demande comprenant un second élément d'information d'authentification (21),
- le dispositif d'étiquette de l'Internet des objets ambiant (220) effectue un processus de vérification ou d'authentification, dans lequel le processus de vérification ou d'authentification implique l'utilisation à la fois du premier élément d'information d'authentification (101) et du second élément d'information d'authentification (21) et l'effection d'une opération de hachage, afin d'obtenir un résultat de vérification ou d'authentification, dans lequel, - dans le cas où le résultat de vérification ou d'authentification est positif - le dispositif d'étiquette de l'Internet des objets ambiant (220) transmet, au dispositif de lecture de l'Internet des objets ambiant (20), l'élément **d'information** requis (221) et dans lequel - dans le cas où le résultat de la vérification ou de l'authentification est négatif - le dispositif d'étiquette de l'Internet des objets ambiant (220) soit ne transmet pas d'informations de réponse, soit transmet une indication selon laquelle le résultat de la vérification ou de l'authentification est négatif.

7. Dispositif d'étiquette de l'Internet des objets ambiant (220) pour communiquer avec un dispositif de lecture de l'Internet des objets ambiant (20), correspondant à un équipement d'utilisateur comprenant une carte à circuit intégré universelle, dans un réseau de communication mobile (100),
dans lequel la communication entre le dispositif de lecture de l'Internet des objets ambiant (20) et le dispositif d'étiquette de l'Internet des objets ambiant (220) implique que le dispositif d'étiquette de l'Internet des objets ambiant (220) reçoive une demande concernant un élément d'information requis (221) à partir du dispositif de lecture de l'Internet des objets ambiant (20), l'élément d'information requis (221) étant stocké sur le dispositif d'étiquette de l'Internet des objets ambiant (220) et l'élément d'information requis (221) pouvant être transmis, par le dispositif d'étiquette de l'Internet des objets ambiant (220), au dispositif de lecture de l'Internet des objets ambiant (20),
dans lequel, afin d'utiliser le dispositif d'étiquette de l'Internet des objets ambiant (220) avec le dispositif de lecture de l'Internet des objets ambiant (20), le dispositif d'étiquette de l'Internet des objets ambiant (220) est configuré de telle sorte que :
- le dispositif d'étiquette de l'Internet des objets ambiant (220) comprend un premier élément d'information d'authentification (101) - ou le dispositif d'étiquette de l'Internet des objets ambiant (220) reçoit, à partir du réseau de communication mobile (100), le premier élément d'information d'authentification (101),
- le dispositif d'étiquette de l'Internet des objets ambiant (220) reçoit un message de demande, à partir du dispositif de lecture de l'Internet des objets ambiant (20), le message de demande comprenant un second élément d'information d'authentification (21),
- le dispositif d'étiquette de l'Internet des objets ambiant (220) effectue un processus de vérification ou d'authentification, dans lequel le processus de vérification ou d'authentification implique l'utilisation à la fois du premier élément d'information d'authentification (101) et du second élément d'information d'authentification (21) et l'effection d'une opération de hachage, afin d'obtenir un résultat de vérification ou d'authentification, dans lequel, - dans le cas où le résultat de vérification ou d'authentification est positif - le dispositif d'étiquette de l'Internet des objets ambiant (220) transmet, au dispositif de lecture de l'Internet des objets ambiant (20), l'élément d'information requis (221) et dans lequel, si le résultat de la vérification ou de l'authentification est négatif, le dispositif d'étiquette de l'Internet des objets ambiant (220) soit ne transmet pas d'informations de réponse, soit transmet une indication selon laquelle le résultat de la vérification ou de l'authentification est négatif.

8. Programme comprenant un code de programme lisible par ordinateur, qui, lorsqu'il est exécuté par un système informatique comprenant : au moins un dispositif de lecture de l'Internet des objets ambiant (20) ; et un dispositif d'étiquette de l'Internet des objets ambiant (220) ; amène le système informatique à effectuer un procédé selon l'une des revendications 1 à 5.

9. Support lisible par ordinateur comprenant des instructions qui, lorsqu'elles sont exécutées sur un système informatique comprenant : au moins un dispositif de lecture de l'Internet des objets ambiant (20) ; et un dispositif d'étiquette de l'Internet des objets ambiant (220) amènent le système informatique à effectuer un procédé selon l'une des revendications 1 à 5.
